# EUROPÄISCHE PATENTSCHRIFT

(11) **EP 0 663 507 B1**
(45) Veröffentlichungstag und Bekanntmachung des Hinweises auf die Patenterteilung: **02.09.1998**
(21) Anmeldenummer: 95100382.1
(22) Anmeldetag: 12.01.1995
(51) Int. Cl.: E06B 3/54, E04F 13/14, E04B 2/88, F16C 11/06, F16M 11/14, E04D 3/06

(54) **Halterung zur Lagerung einer Platte**
Mounting means for supporting a panel
Moyen de montage pour supporter un panneau

(30) Priorität: 14.01.1994 DE 4400979
(43) Veröffentlichungstag der Anmeldung: 19.07.1995
(73) Patentinhaber: Josef Gartner & Co., D-89421 Gundelfingen (DE)
(72) Erfinder: Gartner, Fritz, Dr., D-89428 Gundelfingen (DE); Härtl, Gerald, D-89312 Günzburg (DE)
(74) Vertreter: Müller-Boré & Partner Patentanwälte

(56) Entgegenhaltungen:
- EP-A- 0 201 212
- WO-A-95/16098
- DE-A- 3 927 653
- DE-C- 3 420 696

## Beschreibung

Die Erfindung betrifft eine Halterung zur Lagerung einer Platte, wie sie im Anspruch 1 beschrieben ist.

Aus der EP 0 201 212 B1 ist ein Halter für Glasplatten bekannt, welcher ein in einem Hülsenelement sphärisch drehbares Kugelelement aufweist, wobei das Hülsenelement in einer Bohrung der Platte befestigt ist. Der Drehpunkt der sphärischen Bewegung liegt dabei im wesentlichen in der Mittelebene der Platte. Das Kugelelement ist mit einer Unterkonstruktion verbunden. Dieser Halter läßt keinen unmittelbaren Toleranzausgleich zu. Ein Toleranzausgleich zwischen der Unterkonstruktion und der Platte muß durch eine spezielle Ausgestaltung der Unterkonstruktion erfolgen. Dies ist aufwendig und stellt für den Entwurf eine Einschränkung dar. Durch die zur Aufnahme der sphärischen Lagerung erforderliche große Glasbohrung ist die Lastaufnahme sehr eingeschränkt. Außerdem ist die Konstruktion im Bereich der Glasbohrung nicht wasserdicht, so daß dieser bekannte Halter nur im Innenbereich eingesetzt werden kann.

Aus der DE 39 27 653 C2 ist eine Halterung für Glasplatten bekannt, die eine biegemomentfreie Lagerung mit Toleranzausgleich schafft. Hierbei wird eine Glasscheibe zwischen zwei Auflagetellern mittels einer die Glasscheibe durchdringenden und die Auflageteller miteinander verspannenden Halteschraube eingespannt. Einer der Auflageteller ist über ein Kugelgelenk mit einer Halterung verbunden, welche an der Unterkonstruktion befestigt ist. Ein Toleranzausgleich zwischen der Unterkonstruktion und der Glasscheibe erfolgt hier im Bereich der Glasbohrung, durch welche die Halteschraube hindurchtritt. Kompensationsbewegungen zum Toleranzausgleich finden dabei als Relativbewegungen der Glasscheibe zum Halter statt, so daß keine Bildung einer bündigen Glasfläche über ein größeres Glasplattenfeld möglich ist.

Es ist Aufgabe der vorliegenden Erfindung, einen Halter zur Lagerung einer Platte zu schaffen, der von der Unterkonstruktion unabhängig einsetzbar ist und Spannungen aus Relativbewegungen zwischen Platte und Unterkonstruktion vermeidet.

Diese Aufgabe wird durch die im Anspruch 1 angegebenen Merkmale gelöst.

Durch die translatorische Verschiebbarkeit zwischen dem Ausgleichsteil und dem Ankerteil sowie durch die Verschwenkbarkeit zwischen dem Ausgleichsteil und dem Aufnahmelager ist bei Bewegungen zwischen Platte und Unterkonstruktion Spannungsfreiheit gegeben. Die Platte wird mit dem Halter entweder über das Ankerteil oder über das Aufnahmelager fest verbunden. Dennoch ist eine Relativbewegung zwischen dem Halter und der Platte möglich, also eine spannungsfreie Aufnahme translatorischer sowie rotatorischer Bewegungen. Der vorgeschlagene Halter überträgt somit weder Biegemomente noch Querkräfte auf die Unterkonstruktion aus Bewegungen der Platte oder auf die Platte aus Bewegungen der Unterkonstruktion. Diese Verhinderung der Kraftübertragung zwischen der Platte und der Unterkonstruktion erfolgt durch Kompensationsbewegungen innerhalb des Halters, nämlich die translatorische Verschiebbarkeit zwischen dem Ausgleichsteil und dem Ankerteil sowie die rotatorische Verschwenkung zwischen dem Ausgleichsteil und dem Aufnahmelager. Die feste Verbindung zwischen der Platte und dem Halter gestattet dennoch eine einfache und wirksame Abdichtung, so daß die Konstruktion auch im Außenbereich von Gebäuden einsetzbar ist. Außerdem wird hierdurch die Aufnahme definierter Lasten möglich. Die Halterung bietet allseitige Freiheitsgrade, nämlich zwei translatorische und drei rotatorische Freiheitsgerade, um die Übertragung von Kräften der Platte auf die Unterkonstruktion - oder umgekehrt - zu verhindern. Entsprechende Kräfte können durch Temperaturdehnungen, zusätzliche Betriebslasten, wie beispielsweise Wind und Schnee, oder Bewegungen im Baukörper entstehen. Dies bedeutet, daß die Unterkonstruktion und das Aufnahmelager mit dem Ausgleichsteil nur soweit verspannt sind, daß sie sich trotz Übertragung definierter Lasten verschwenken können. Ebenso muß das Ausgleichsteil eine Verschiebung zulassen, in einer besonderen Ausführungsform beispielsweise in Form einer Ringausnehmung. Die in einer Ausführungsform vorgesehene Verschraubung einer Überwurfmutter mit dem Ankerteil dient somit nur dazu, den Grad der Beweglichkeit, also leichtere oder schwerere Beweglichkeit, einzustellen. Selbstverständlich müssen die Abmessungen der einzelnen Teile und/oder deren Beabstandung zueinander so bemessen sein, daß auch bei maximal zu erwartenden Bewegungen die angestrebte Bewegungs- und somit Spannungsfreiheit erhalten bleibt. Mit dem vorgeschlagenen Halter können daneben Einbautoleranzen berücksichtigt werden, wodurch auch ein spannungsfreier Einbau ermöglicht wird. Bei dem vorgeschlagenen Halter handelt es sich um einen punktförmigen Halter.

Mit Vorteil weisen dabei das Ausgleichsteil und das Aufnahmelager einander berührende, konzentrisch gekrümmte Flächen auf. Durch diese Ausgestaltung kann die angestrebte Verschwenkbarkeit auf einfache Weise erreicht werden.

Eine besonders wirksame Verschwenkbarkeit wird dadurch geschaffen, daß die einander berührenden, konzentrisch gekrümmten Flächen des Ausgleichsteils und des Aufnahmelagers sphärisch gekrümmt sind. Hierdurch werden auf einfache Weise die drei rotatorischen Freiheitsgrade geschaffen.

Ist das Ausgleichsteil bezüglich des Ankerteils um eine zu einer Achse des Ankerteils parallele Achse des Ausgleichsteils rotatorisch bewegbar, so wird die Verschwenkbarkeit zusätzlich erleichtert.

Wenn das Ausgleichsteil, das Ankerteil, die Überwurfmutter und/oder das Aufnahmelager aus einem nicht oder nur gering wärmeleitenden Material, beispielsweise Edelstahl, bestehen, so wird eine Kältebrücke durch die Halterung vermieden und eine besonders wirksame Wärmeisolierung zwischen der Platte und der Unterkonstruktion geschaffen.

Eine besonders einfache Montage wird dadurch ermöglicht, daß zur Lagerung des Ausgleichsteils am Ankerteil eine das Ausgleichsteil übergreifende und mit dem Ankerteil verbindbare Überwurfmutter vorgesehen ist. Die Überwurfmutter kann dabei sowohl mittels einer Gewindeverbindung als auch mittels einer Bajonettverbindung am Ankerteil befestigbar sein. Andererseits kann das Ankerteil als Überwurf ausgebildet und mit einer geeigneten Verbindung zum Ausgleichsteil versehen sein.

Ist das Ausgleichsteil mit einem sich radial erstreckenden Ringvorsprung versehen, der von der Überwurfmutter übergriffen wird und weist das Ankerteil oder die Überwurfmutter eine angepaßte, aber im Durchmesser größere Ringausnehmung zur Aufnahme des Ringvorsprungs auf, so kann eine beliebige Translationsbewegung innerhalb der Ebene des Ringvorsprungs und der Ringausnehmung erfolgen. Somit können auf einfache Weise die zwei translatorischen Freiheitsgrade erreicht werden.

Zweckmäßigerweise sind das Ankerteil mit der Platte und das Aufnahmelager mit der Unterkonstruktion verbindbar, wobei die gekrümmte Fläche des Aufnahmelagers konkav und die gekrümmte Fläche des Ausgleichsteils konvex ausgebildet sind.

Mit Vorteil sind das Ankerteil mit der Unterkonstruktion und das Aufnahmelager mit der Platte verbindbar, wobei die gekrümmte Fläche des Aufnahmelagers konvex und die gekrümmte Fläche des Ausgleichsteils konkav ausgebildet sind.

Bei einer bevorzugten Ausführungsform des vorgeschlagenen Halters sind sämtliche Teile desselben miteinander über Verschraubungen verbunden, wodurch eine solide Konstruktion erreicht wird, die definierte Lasten aufnehmen kann. Darüber hinaus kann mit der vorgeschlagenen Konstruktion durch deren Kompaktheit Filigranität erzielt werden, da alle Funktionselemente in einer Konstruktion vereint sind.

Die Erfindung wird nachfolgend anhand von Ausführungsbeispielen näher erläutert. Es zeigen:
- Fig. 1A: eine erste Ausführungsform der Erfindung,
- Fig. 1B: die Ausführungsform nach Fig. 1A bei einer translatorischen Verschiebung,
- Fig. 1C: die Ausführungsform nach Fig. 1A bei einer ersten Verschwenkung,
- Fig. 1D: die Ausführungsform nach Fig. 1A bei einer zweiten Verschwenkung,
- Fig. 2A: eine zweite Ausführungsform der Erfindung,
- Fig. 2B: die Ausführungsform nach Fig. 2A bei einer ersten Verschwenkung, und
- Fig. 2C: die Ausführungsform nach Fig. 2A bei einer zweiten Verschwenkung.

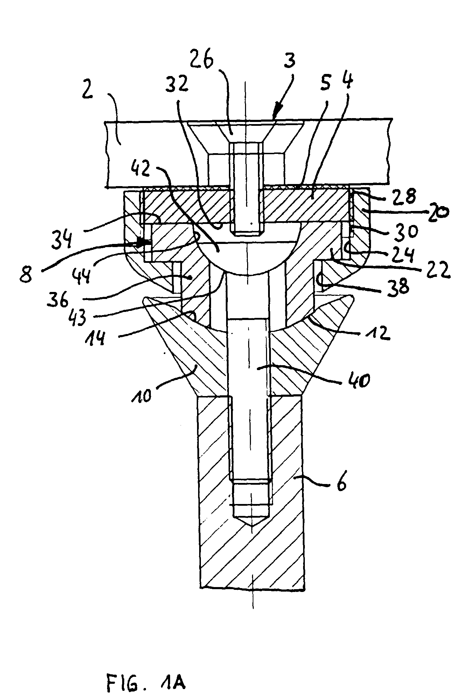

In Fig. 1A ist ein Ankerteil 4 einer erfindungsgemäßen Halterung mittels einer eine Glasplatte 2 durchdringenden Glasbefestigung 3 an der Glasplatte 2 befestigt. Zwischen der Glasplatte 2 und dem Ankerteil 4 ist eine elastische Dichtung 5 vorgesehen.

Die Glasbefestigung 3 weist eine in eine Senkbohrung der Glasplatte versenkt eingesetzte und mit dem Ankerteil 4 verschraubte Befestigungsschraube 26 auf. Somit erfolgt die Befestigung formschlüssig.

Das Ankerteil 4 ist rund ausgebildet und an seinem Umfang mit einem Gewinde 28 versehen, welches mit einem Gewinde 30 einer Überwurfmutter 20 zusammenwirkt. Innerhalb der Überwurfmutter 20 ist eine Ringausnehmung 24 gebildet, die einen sich radial erstreckenden Ringvorsprung 22 eines Ausgleichsteils 8 aufnimmt, welches an der von der Glasplatte 2 abgewandten Oberfläche 32 des Ankerteils 4 anliegt und auf dieser parallel zur Oberfläche 32 verschiebbar ist. Die Verschiebbarkeit (zwei translatorische Freiheitsgrade) des Ausgleichsteils 8 wird dadurch gewährleistet, daß der Durchmesser der Ringausnehmung 24 in der Überwurfmutter 20 größer ist als der Außendurchmesser des Ringvorsprungs 22 am Ausgleichsteil 8. Das Ausgleichsteil 8 ist mit einem rohrförmigen Ansatz 36 am von der mit der Oberfläche 32 des Ankerteils 4 in Berührung stehenden Oberfläche 34 des Ausgleichsteils 8 abgewandten Ende des Ausgleichsteils 8 versehen, welcher aus einer zentralen Öffnung 38 der Überwurfmutter 20 heraustritt. Der Außendurchmesser des rohrförmigen Ansatzes 36 ist geringer als der Durchmesser der zentralen Offnung 38, um die Verschiebbarkeit des Ausgleichsteils 8 zu erhalten.

Der rohrförmige Ansatz 36 besitzt an seinem freien Ende eine konvexe sphärische Fläche 12. Die konvexe sphärische Fläche 12 steht mit einer konkaven sphärischen Fläche 14 eines Aufnahmelagers 10 in Berührung, welches mit einer Unterkonstruktion 6 fest verbunden ist.

Eine Halteschraube 40 durchdringt den rohrförmigen Ansatz 36 und ist in das Aufnahmelager 10 sowie die Unterkonstruktion 6 eingeschraubt. Die Halteschraube 40 besitzt einen als Gegenlager ausgebildeten Kopf 42, welcher an einer dem Aufnahmelager 10 zugewandten Fläche 43 sphärisch konvex und konzentrisch zu den Flächen 12 und 14 ausgebildet ist. Der Kopf 42 liegt mit seiner konvexen Fläche 43 an einer angepaßt sphärisch konkav ausgebildeten Innenfläche 44 des Ausgleichsteils 8 an. Somit ist eine Verschwenkung (drei rotatorische Freiheitsgrade) der mit dem Aufnahmelager 10 verbundenen Unterkonstruktion 6 gegenüber dem Ausgleichsteil 8 möglich, wobei Relativbewegungen zwischen den Flächen 12 und 14 sowie dem Kopf 42 und der Innenfläche 44 auftreten. Auf diese Weise kann zusätzlich zu der translatorischen Verschiebung des Ausgleichsteils 8 bezüglich des Ankerteils 4 eine Verschwenkung des Aufnahmelagers 10 bezüglich des Ausgleichsteils 8 erfolgen. Es versteht sich dabei, daß die vorbezeichneten Teile nur soweit miteinander verspannt werden, daß ein freies "Sich-Einstellen" dieser Teile zueinander möglich ist, um die Spannungsfreiheit bei Relativbewegungen zwischen der Platte 2 und der Unterkonstruktion 6 zu erreichen. Dazu können die in gegenseitiger Berührung stehenden Flächen, die sich bei Bewegung relativ zueinander verschieben, entsprechend behandelt sein, um die Relativbewegung dieser Teile zueinander zu erleichtern und dabei dennoch eine ausreichende Verspannung dieser Teile miteinander zu erreichen.

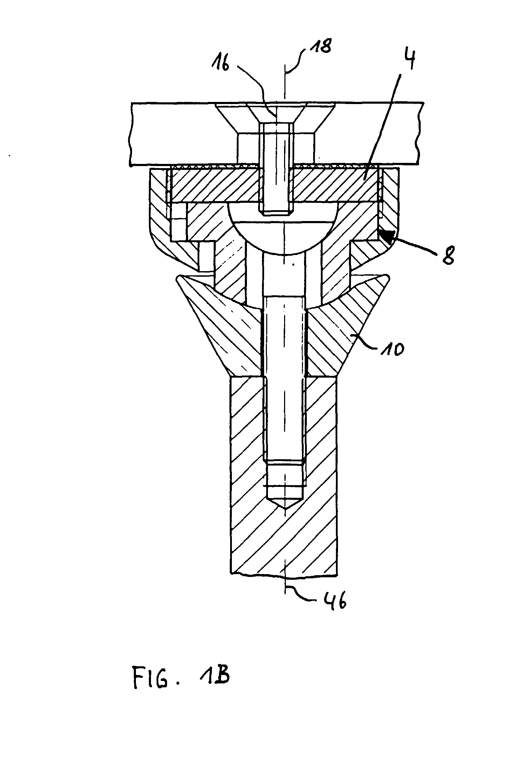

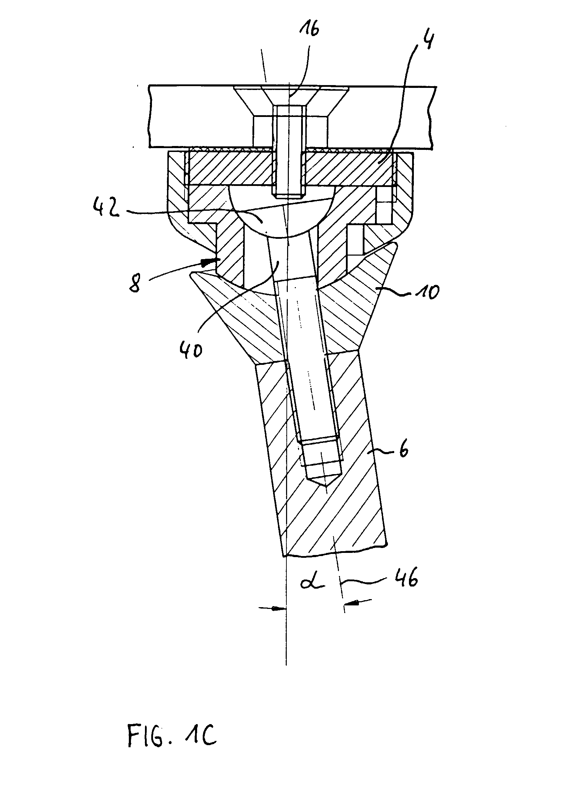

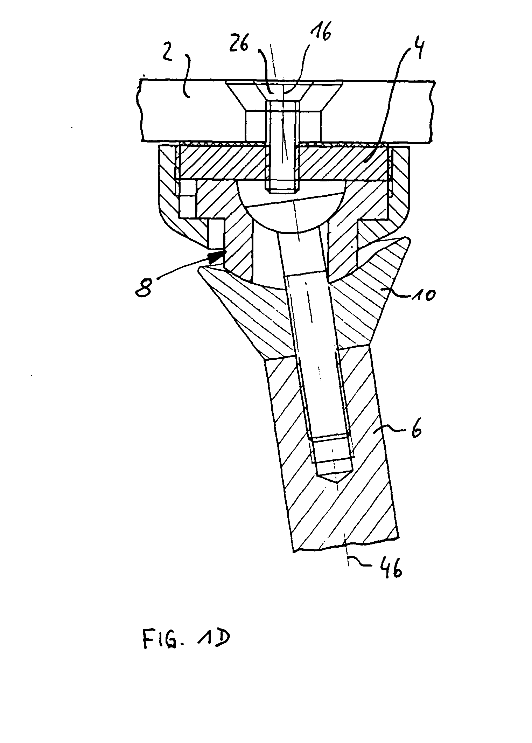

In Fig. 1B ist das Ausgleichsteil 8 gegenüber dem Ankerteil 4 nach rechts translatorisch verschoben, so daß die Achse 16 des Ankerteils 4 und die Achse 18 des Ausgleichsteils 8 nicht mehr deckungsgleich sondern beabstandet voneinander parallel zueinander verlaufen. Die Achse 18 des Ausgleichsteils 8 und die Achse 46 des Aufnahmelagers 10 sind jedoch deckungsgleich, da das Aufnahmelager 10 bezüglich des Ausgleichsteils 8 nicht verschwenkt ist.

In Fig. 1C ist das Ausgleichsteil 8 bezüglich des Ankerteils 4 ganz nach links translatorisch verschoben. Gleichzeitig ist das mit der Unterkonstruktion 6 verbundene Aufnahmelager 10 bezüglich des Ausgleichsteils 8 entgegen dem Uhrzeigersinn verschwenkt. Die Achse 16 des Ankerteils 4, die gleichzeitig Achse der Glasbefestigung 3 ist, schließt dabei mit der Achse 46 des Aufnahmelagers 10 einen Winkel a ein. Abhängig von den gewählten Abmessungen kann der Winkel a in den konstruktiv sinnvollen Bereichen beliebige Größen einnehmen. Der Schnittpunkt der beiden Achsen 16 und 46 liegt dabei im Bereich der konvex gekrümmten Fläche 43 des Kopfes 42 der Halteschraube 40.

In Fig. 1D nimmt das Ausgleichsteil 8 bezüglich des Ankerteils 4 die gleiche Position ein wie in Fig. 1B, d.h., daß das Ausgleichsteil 8 ganz nach rechts verschoben ist, wobei zusätzlich eine Verschwenkungsstellung gezeigt ist. Das Aufnahmelager 10 mit der zugehörigen Unterkonstruktion 6 ist dabei bezüglich des Ausgleichsteils 8 entgegen dem Uhrzeigersinn verschwenkt, wobei jedoch durch die gegenüber der Fig. 1C andere Lage des Ausgleichsteils 8 der Schnittpunkt der Achse 16 des Ankerteils 4 und der Achse 46 des Aufnahmelagers 10 im Bereich der Befestigungsschraube 26 etwa in der Mittelebene der Glasplatte 2 liegt.

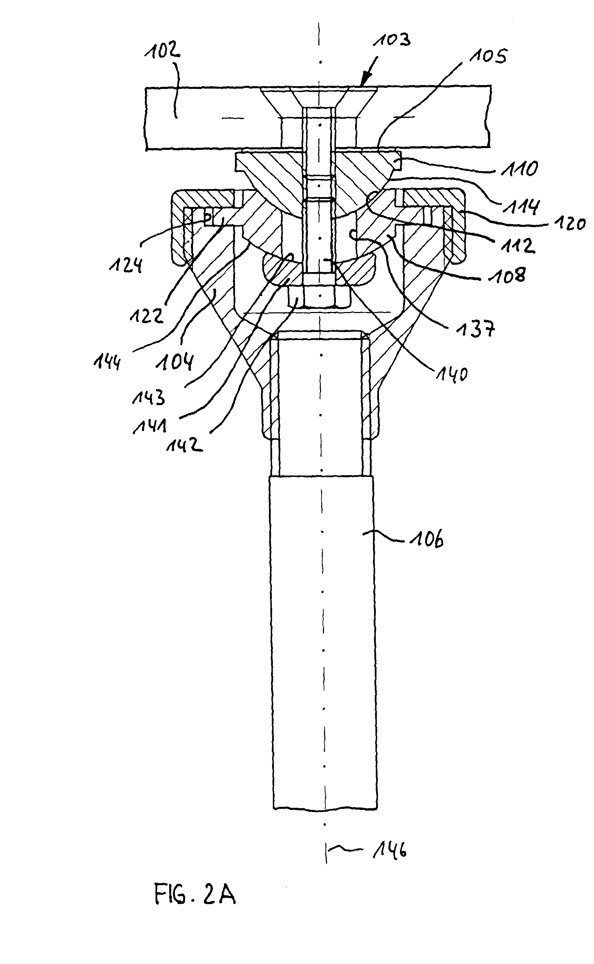

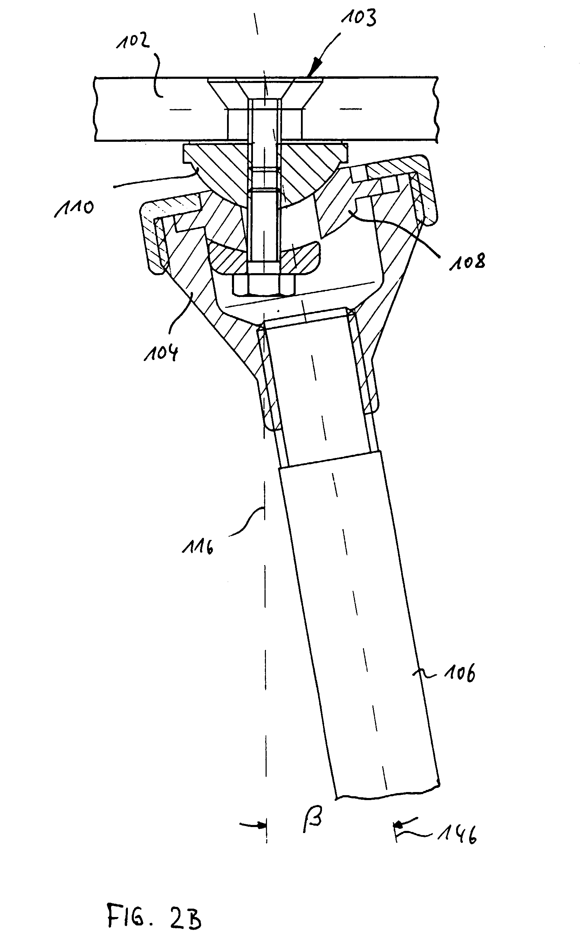

In Fig. 2A ist eine alternative Ausführungsform der Erfindung dargestellt, wobei die entsprechenden Bezugszeichen gegenüber der ersten Ausführungsform um den Wert 100 erhöht sind.

Ein Aufnahmelager 110 ist mittels einer Glasbefestigung 103 mit einer Glasplatte 102 fest verbunden, wobei die Verbindung entsprechend der in Fig. 1A ausgebildeten Verbindung aufgebaut ist. Ein Ankerteil 104 ist mit einer Unterkonstruktion 106 fest verbunden. Zwischen dem Ankerteil 104 und der Glasplatte 102 ist eine Dichtung 105 angeordnet. Das Ankerteil 104 weist an seiner von der Unterkonstruktion 106 abgewandten Seite eine Ringausnehmung 124 auf, in welche ein Ringvorsprung 122 eines Ausgleichsteils 108 eingreift. Eine Überwurfmutter 120 ist auf das Ankerteil 104 aufgeschraubt und fixiert dadurch das Ausgleichsteil 108, wie dies in Verbindung mit Fig. 1A beschrieben worden ist. Das Ausgleichsteil 108 kann sich bezüglich des Ankerteils 104 translatorisch in einer rechtwinklig zur Achse 146 der Unterkonstruktion 106 verlaufenden Ebene bewegen (zwei translatorische Freiheitsgrade).

Das Ausgleichsteil 108 ist an seiner dem Aufnahmelager 110 zugewandten Seite sphärisch konkav ausgebildet, und das Aufnahmelager 110 ist an seiner dem Ausgleichsteil 108 zugewandten Seite mit einer sphärisch konvex ausgebildeten Fläche 114 versehen. Die Fläche 114 steht in Berührung mit der konkav ausgebildeten Fläche 112 des Ausgleichsteils 108, so daß das Ausgleichsteil 108 auf dem Aufnahmelager 110 verschwenkbar ist.

An seiner vom Aufnahmelager 110 abgewandten Seite ist das Ausgleichsteil 108 mit einer sphärisch konvex gekrümmten Fläche 144 versehen, die mit einer sphärisch konkav ausgebildeten Fläche 143 eines Unterlegeteils 141 für den Schraubenkopf 142 einer Halteschraube 140 in Berührung steht. Die Halteschraube 140 klemmt mittels des Unterlegeteils 141 das Ausgleichsteil 108 gegen das Aufnahmelager 110. Die Krümmungen der Flächen 114, 112, 144 und 141 sind konzentrisch ausgebildet, so daß ein Verschwenken (drei rotatorische Freiheitsgrade) des Ausgleichsteils 8 mit der ihm zugeordneten Unterkonstruktion 106 bezüglich des mit der Glasplatte 102 verbundenen Aufnahmelagers 110 in analoger Weise, wie es bereits in Verbindung mit dem ersten Ausführungsbeispiel der Erfindung beschrieben worden ist, möglich ist.

Fig. 2B zeigt eine Einstellung der zweiten Ausführungsform der Erfindung gemäß Fig. 2A, bei welcher das Ausgleichsteil 108 bezüglich des Ankerteils 104 ganz nach links verschoben ist und wobei das Ausgleichsteil 108 mit der ihm zugeordneten Unterkonstruktion 106 bezüglich des Aufnahmelagers 110 entgegen dem Uhrzeigersinn verschwenkt ist. Die Achse 146 der Unterkonstruktion 106 bildet dabei mit der Achse 116 der Glasbefestigung 103, welche gleichzeitig Achse des Aufnahmelagers 110 ist, einen Winkel β. Der Schnittpunkt der Achsen 116 und 146 liegt dabei im Bereich der vom Aufnahmelager 110 abgewandten äußeren Oberfläche der Glasplatte 102.

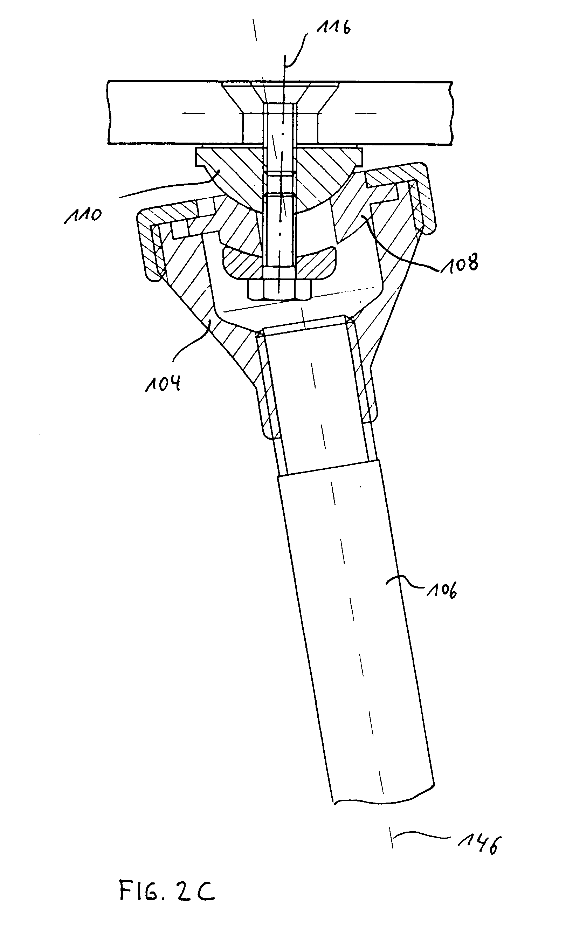

In Fig. 2C ist eine weitere Einstellung der Ausführungsform nach Fig. 2A gezeigt, wobei das Ausgleichsteil 108 bezüglich des Ankerteils 104 ganz nach rechts verschoben ist. Das Ausgleichsteil 108 und mit ihm die Unterkonstruktion 106 sind dabei ebenfalls bezüglich des Aufnahmelagers 110 entgegen dem Uhrzeigersinn verschwenkt. Der Schnittpunkt der Achsen 116 und 146 liegt in diesem Fall etwa in der Mitte des Aufnahmelagers 110.

### Bezugszeichenliste

- 2: Glasplatte
- 3: Glasbefestigung
- 4: Ankerteil
- 5: Dichtung
- 6: Unterkonstruktion
- 8: Ausgleichsteil

- 10: Aufnahmelager
- 12: Fläche
- 14: Fläche
- 16: Achse
- 18: Achse

- 20: Überwurfmutter
- 22: Ringvorsprung
- 24: Ringausnehmung
- 26: Befestigungsschraube
- 28: Gewinde

- 30: Gewinde
- 32: Oberfläche
- 34: Oberfläche
- 36: rohrförmiger Ansatz
- 38: Öffnung

- 40: Halteschraube
- 42: Kopf
- 43: Fläche
- 44: Innenfläche
- 46: Achse

- 102: Glasplatte
- 103: Glasbefestigung
- 104: Ankerteil
- 105: Dichtung
- 106: Unterkonstruktion
- 108: Ausgleichsteil

- 110: Aufnahmelager
- 112: Fläche
- 114: Fläche
- 116: Achse

- 120: Überwurfmutter
- 122: Ringvorsprung
- 124: Ringausnehmung

- 140: Halteschraube
- 141: Unterlegeteil
- 142: Schraubenkopf
- 143: Fläche
- 144: Fläche
- 146: Achse

## Patentansprüche

1. Halter zur Lagerung einer Platte (2,102), insbesondere einer Glas- oder Paneelplatte, an einer Unterkonstruktion (6,106), bei welchem Bewegungen zwischen Platte (2,102) und Unterkonstruktion (6,106) spannungsfrei aufnehmbar sind,
mit einem Ankerteil (4,104), das entweder mit der Platte (2,102) oder mit der Unterkonstruktion (6,106) verbindbar ist,
mit einem Ausgleichsteil (8,108), das am Ankerteil (4,104) gelagert und bezüglich des Ankerteils (4,104) zumindest translatorisch verschiebbar ist, und
mit einem Aufnahmelager (10,110), das entweder mit der Unterkonstruktion (6,106) oder mit der Platte (2,102) verbindbar ist, wobei das Ausgleichsteil (8,108) und das Aufnahmelager (10,110) relativ zueinander verschwenkbar verbunden sind.

2. Halter nach Anspruch 1, bei welchem das Ausgleichsteil (8,108) und das Aufnahmelager (10,110) einander berührende, konzentrisch gekrümmte Flächen (12,112, 14,114) aufweisen.

3. Halter nach Anspruch 1 oder 2, bei welchem die einander berührenden, konzentrisch gekrümmten Flächen (12,112, 14,114) des Ausgleichsteils (8,108) und des Aufnahmelagers (10,110) sphärisch gekrümmt sind.

4. Halter nach einem der Ansprüchen 1 bis 3, bei welchem das Ausgleichsteil (8,108) bezüglich des Ankerteils (4,104) um eine zu einer Achse (16,116) des Ankerteils (4,104) parallele Achse (18,118) des Ausgleichsteils (8,108) rotatorisch bewegbar ist.

5. Halter nach einem der Ansprüche 1 bis 4, bei welchem das Ausgleichsteil (8,108), das Ankerteil (4,104), die Überwurfmutter (20,120) und/oder das Aufnahmelager (10,110) aus einem nicht oder nur gering wärmeleitenden Material bestehen.

6. Halter nach einem der Ansprüche 1 bis 5, bei welchem zur Lagerung des Ausgleichsteils (8,108) am Ankerteil (4,104) eine das Ausgleichsteil (8,108) übergreifende und mit dem Ankerteil (4,104) verbindbare Überwurfmutter (20,120) vorgesehen ist.

7. Halter nach Anspruch 6, bei welchem das Ausgleichsteil (8,108) mit einem sich radial erstreckenden Ringvorsprung (22,122) versehen ist, der von der Überwurfmutter (20,120) übergriffen wird und daß das Ankerteil (4,104) oder die Überwurfmutter (20,120) eine angepaßte, aber im Durchmesser größere Ringausnehmung (24,124) zur Aufnahme des Ringvorsprunges (22,122) aufweist.

8. Halter nach einem der Ansprüche 1 bis 7, bei welchem das Ankerteil (4) mit der Platte (2) verbindbar ist und daß das Aufnahmelager (10) mit der Unterkonstruktion (6,106) verbindbar ist, wobei die gekrümmte Fläche (14) des Aufnahmelagers (10) konkav und die gekrümmte Fläche (12) des Ausgleichsteils (8) konvex ausgebildet ist.

9. Halter nach einem der Ansprüche 1 bis 7, bei welchem das Ankerteil (104) mit der Unterkonstruktion (106) verbindbar ist und daß das Aufnahmelager (110) mit der Platte (102) verbindbar ist, wobei die gekrümmte Fläche (114) des Aufnahmelagers (110) konvex und die gekrümmte Fläche (112) des Ausgleichsteils (108) konkav ausgebildet ist.

## Claims

1. Retaining means for mounting a panel (2, 102), in particular a glass panel or panelling, on a substructure (6, 106), in the case of which retaining means movements between the panel (2, 102) and substructure (6, 106) can be absorbed without any stressing, having an anchor part (4, 104), which can be connected either to the panel (2, 102) or to the substructure (6, 106), having a compensating part (8, 108), which is mounted on the anchor part (4, 104) and can be displaced at least in a translatory manner with respect to the anchor part (4, 104), and having a receiving bearing (10, 110), which can be connected either to the substructure (6, 106) or to the panel (2, 102), the compensating part (8, 108) and the receiving bearing (10, 110) being connected such that they can be pivoted relative to one another.

2. Retaining means according to Claim 1, in the case of which the compensating part (8, 108) and the receiving bearing (10, 110) have concentrically curved surfaces (12, 112, 14, 114) which are in contact with one another.

3. Retaining means according to Claim 1 or 2, in the case of which the concentrically curved surfaces (12, 112, 14, 114) of the compensating part (8, 108) and the receiving bearing (10, 110), said surfaces being in contact with one another, are curved spherically.

4. Retaining means according to one of Claims 1 to 3, in the case of which the compensating part (8) can be moved in rotation with respect to the anchor part (4) about an axis (18) of the compensating part (8), said axis being parallel to the axis (16) of the anchor part (4).

5. Retaining means according to one of Claims 1 to 4, in the case of which the compensating part (8, 108), the anchor part (4, 104), the union nut (20, 120) and/or the receiving bearing (10, 110) consist of a material which does not conduct heat or does so only to a slight extent.

6. Retaining means according to one of Claims 1 to 5, in the case of which, for the purpose of mounting the compensating part (8, 108) on the anchor part (4, 104), there is provided a union nut (20, 120) which engages over the compensating part (8, 108) and can be connected to the anchor part (4, 104).

7. Retaining means according to Claim 6, in the case of which the compensating part (8, 108) is provided with a radially extending annular protrusion (22, 122) which has the union nut (20, 120) engaging over it, and in the case of which the anchor part (4, 104) or the union nut (20, 120) has an annular recess (24, 124) which is adapted, but is of larger diameter, and is intended for receiving the annular protrusion (22, 122).

8. Retaining means according to one of Claims 1 to 7, in the case of which the anchor part (4) can be connected to the panel (2), and in the case of which the receiving bearing (10) can be connected to the substructure (6), the curved surface (14) of the receiving bearing (10) being of concave design and the curved surface (12) of the compensating part (8) being of convex design.

9. Retaining means according to one of Claims 1 to 7, in the case of which the anchor part (104) can be connected to the substructure (106), and in the case of which the receiving bearing (110) can be connected to the panel (102), the curved surface (114) of the receiving bearing (110) being of convex design and the curved surface (112) of the compensating part (108) being of concave design.

## Revendications

1. Support pour le montage d'une plaque (2, 102), en particulier d'un panneau en verre ou en lambris, sur un soubassement (6, 106) dans lequel des mouvements entre la plaque (2, 102) et le soubassement (6, 106) peuvent être absorbés sans contrainte,
comportant une pièce d'ancrage (4, 104) qui peut être reliée soit à la plaque (2, 102) soit au soubassement (6, 106),
une pièce de compensation (8, 108) qui est montée sur la pièce d'ancrage (4, 104) et qui peut être déplacée au moins en translation par rapport à la pièce d'ancrage (4, 104),
et un support de réception (10, 110) qui peut être relié soit au soubassement (6, 106) soit à la plaque (2, 102), la pièce de compensation (8) et le support de réception (10, 110) pouvant être mis en pivotement l'un par rapport à l'autre.

2. Support selon la revendication 1, dans lequel la pièce de compensation (8, 108) et le support de réception (10, 110) présentent des surfaces (12, 14), courbes concentriquement, qui se touchent.

3. Support selon la revendication 1 ou 2, dans lequel les surfaces (112, 14, 114) courbes concentriquement, qui se touchent, de la pièce (8, 108) de compensation et du support de réception (10, 110) ont une courbure sphérique.

4. Support selon l'une des revendications 1 à 3, dans lequel la pièce de compensation (8, 108) peut être déplacée en rotation par rapport à la pièce d'ancrage (4, 104) sur un axe (18, 118) de la pièce de compensation (8, 108), parallèle à un axe (16, 116) de la pièce de compensation (8, 108).

5. Support selon l'une des revendications 1 à 4, dans lequel la pièce de compensation (8, 108), la pièce d'ancrage (4, 104), l'écrou-chapeau (20, 120) et/ou le support de réception (10, 110) sont constitués d'un matériau non conducteur de la chaleur, ou faiblement conducteur de la chaleur.

6. Support selon l'une des revendications 1 à 5, dans lequel est prévu en vue du montage de la pièce de compensation (8, 108) sur la pièce d'ancrage (4, 104) un écrou-chapeau (20, 120) coiffant la pièce de compensation (8, 108) et susceptible d'être relié à la pièce d'ancrage (4, 104).

7. Support selon la revendication 6, dans lequel la pièce de compensation (8, 108) est munie d'une saillie annulaire (22, 122) qui s'étend radialement et qui est coiffée par l'écrou-chapeau (20, 120) et la pièce d'ancrage (4, 104), ou l'écrou-chapeau (20, 120), présente un évidement annulaire (24, 124) adapté mais de plus grand diamètre, destiné à recevoir la saillie annulaire (22, 122).

8. Support selon l'une des revendications 1 à 7, dans lequel la pièce d'ancrage (4) peut être reliée à la plaque (2) et le support de réception (10) peut être relié au soubassement (6, 106), la surface courbe (14) du support de réception (10) ayant une forme concave et la surface courbe (12) de la pièce de compensation (8) ayant une forme convexe.

9. Support selon l'une des revendications 1 à 7, dans lequel la pièce d'ancrage (104) peut être reliée au soubassement (106) et le support de réception (110) peut être relié à la plaque (102), la surface courbe (114) du support de réception (110) ayant une forme convexe et la surface courbe (112) de la pièce de compensation (108) ayant une forme concave.
